# EUROPEAN PATENT SPECIFICATION

(11) **EP 4 073 162 B1**
(45) Date of publication and mention of the grant of the patent: **04.02.2026**
(21) Application number: 20900608.9
(22) Date of filing: 08.12.2020
(51) Int. Cl.: C08K 5/11, C08K 9/04, D06M 15/11

(54) **FIBERGLASS INSULATION PRODUCT**
GLASFASERISOLIERPRODUKT
PRODUIT D'ISOLATION EN FIBRES DE VERRE

(30) Priority: 09.12.2019 US 201962945313 P
(43) Date of publication of application: 19.10.2022
(60) Divisional application: 25217436.2
(73) Proprietor: Owens Corning Intellectual Capital, LLC, Toledo, OH 43659 (US)
(72) Inventor: GRANT, Larry J., Westerville, Ohio 43082 (US); HOUPT, Ronald A., Newark, Ohio 43055 (US); BOONE, Teno, Columbus, Ohio 43206 (US)
(74) Representative: Novagraaf Group
(86) International application number: PCT/US2020/063699
(87) International publication number: WO 2021/118952

(56) References cited:
- WO-A1-2005/077184
- US-A- 4 114 335
- US-A1- 2005 166 543
- US-A1- 2008 003 431
- US-A1- 2009 324 915
- US-A1- 2010 151 223
- US-A1- 2019 106 563
- US-A1- 2019 106 563
- US-A1- 2019 136 527
- US-B2- 9 290 640
- US-B2- 9 290 640
- ANONYMOUS: "R-Value and Densities Chart", PLTW ENGINEERING, 2010, pages 1 - 5, XP055836820, Retrieved from the Internet <URL:https://www.windsor-csd.org/Downloads/R-ValueDensitiesChart2.pdf> [retrieved on 20210128]

## Description

### CROSS-REFERENCE TO RELATED APPLICATIONS

### FIELD

The present application generally relates to fiberglass insulation products, and more particularly, to fiberglass insulation products made from small diameter fibers.

### BACKGROUND

The term "fibrous insulation product" is general and encompasses a variety of compositions, articles of manufacture, and manufacturing processes. Mineral fibers (e.g., glass fibers) are commonly used in insulation products and nonwoven mats. Fibrous insulation is typically manufactured by fiberizing a molten composition of polymer, glass, or other mineral and spinning fibers from a fiberizing apparatus, such as a rotating spinner. To form an insulation product, fibers produced by the rotating spinner are drawn downwardly from the spinner towards a conveyor by a blower. As the fibers move downward, a binder material is sprayed onto the fibers and the fibers are collected into a high loft, continuous blanket on the conveyor. The binder material gives the insulation product resiliency for recovery after packaging and provides stiffness and handleability so that the insulation product can be handled and applied as needed in the insulation cavities of buildings. The binder composition also provides protection to the fibers from interfilament abrasion and promotes compatibility between the individual fibers.

The blanket containing the binder-coated fibers is then passed through a curing oven and the binder is cured to set the blanket to a desired thickness. After the binder has cured, the fiber insulation may be cut into lengths to form individual insulation products, and the insulation products may be packaged for shipping to customer locations. One typical insulation product produced is an insulation batt or blanket, which is suitable for use as wall insulation in residential dwellings or as insulation in the attic and floor insulation cavities in buildings. Another common insulation product is air-blown or loose-fill insulation, which is suitable for use as sidewall and attic insulation in residential and commercial buildings as well as in any hard-to-reach locations. Loose-fill insulation can be formed of small cubes that are cut from insulation blankets, compressed, and packaged in bags.

Fibrous insulation products may be characterized by many different properties, such as for example, density. Low density flexible insulation batts and blankets typically have densities between 0.4 pounds/cubic foot ("pcf") and 2.0 pcf (6.4 kg/m³ to 32.0 kg/m³), and are often used for residential insulation in walls, attics, and basements. Fibrous insulation products also include higher density products having densities from 7 pcf to 10 pcf (112 kg/m³ to 160 kg/m³), such as boards and panels or formed products. Higher density insulation products are often used in industrial and/or commercial applications, including but not limited to metal building wall and ceiling insulation, pipe or tank insulation, insulative ceiling and wall panels, duct boards, etc.

US2008003431A1 discloses coated fibrous nodules suitable for forming an insulation product, and an insulation product formed from the nodules, wherein the nodules comprise fibrous nodules formed from inorganic fibers, wherein a majority of the fibrous nodules has a maximum dimension of about one-half inch, and wherein the fibrous nodules are coated with a solution comprising water and a water soluble binder. Also provided is an insulation product formed from the coated fibrous nodules. US2009324915A1 discloses binders to produce or promote cohesion in non-assembled or loosely assembled matter. US2010/151223A1 discloses a needled rotary fiberglass glass insulation product including a plurality of single component rotary glass fibers wherein at least a portion of the fibers are entangled and mechanically bonded. A binder is applied to at least a portion of the glass fibers.

### SUMMARY

The present invention provides a fibrous insulation batt as set out in claim 1.

Described herein is a fibrous insulation product having a plurality of randomly oriented glass fibers and a binder composition that holds the glass fibers together. The fibrous insulation product has an R-value in the range of 10 to 54 and, after curing, has a density, when uncompressed, in the range of 0.30 pcf to 2.7 pcf (4.81 kg/m³ to 43.25 kg/m³). Furthermore, the fibrous insulation product includes glass fibers that, prior to the application of the binder composition, have an average fiber diameter in the range of 8 hundred thousandths of an inch (HT) to 12 HT (2.0 µm to 3.0 µm) and a quantity of binder that is in the range of 2% to10% by weight of the fibrous insulation product.

Also described herein is a building frame having a plurality of parallel, spaced apart framing members and a fiberglass insulation batt received between two of the plurality of framing members. The fiberglass batt having a plurality of randomly oriented glass fibers and a binder composition that holds the glass fibers together. The fibrous insulation batt has an R-value in the range of 10 to 54 and, after curing, has a density, when uncompressed, in the range of 0.30 pcf to 2.7 pcf (4.8 kg/m³ to 43.2 kg/m³). Furthermore, the fibrous insulation batt includes glass fibers that, prior to the application of the binder composition, have an average fiber diameter of 8 HT to 12 HT (2.03 µm to 3.04 µm) and a quantity of binder that is in the range of 2% to 10% by weight of the fibrous insulation product.

### BRIEF DESCRIPTION OF THE DRAWINGS

Features and advantages of the present invention will become apparent to those of ordinary skill in the art to which the invention pertains from a reading of the following description together with the accompanying drawings, in which:
FIG. 1 is a perspective view of an exemplary embodiment of a fibrous insulation product;
FIG. 2 is an elevational view of an exemplary embodiment of a manufacturing line for producing the fibrous insulation product of FIG. 1; and
FIG. 3 is a graph of comfort factor vs. average fiber diameter/density for fibrous insulation specimens.

### DETAILED DESCRIPTION

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are described herein.

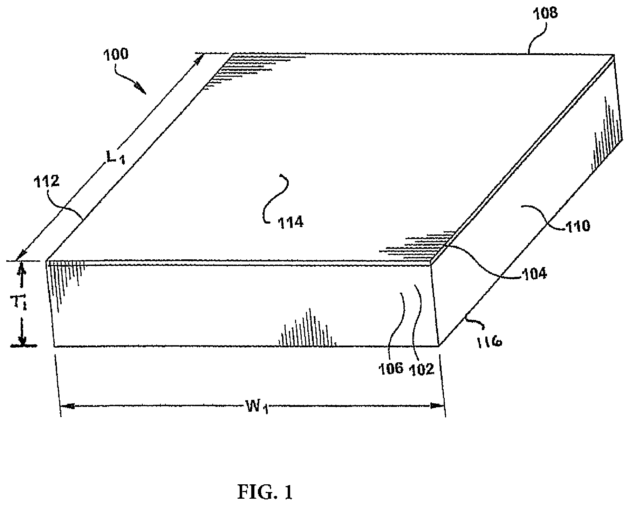

FIG. 1 illustrates an exemplary embodiment of a fibrous insulation product 100. The fibrous insulation product 100 may be configured in a variety of ways. Fibrous insulation products are generally formed of matted inorganic fibers bonded together by a binder composition. Examples of suitable inorganic fibers include glass fibers, wool glass fibers, ceramic fibers, stone, slag, and basalt. Optionally, other reinforcing fibers such as natural fibers and/or synthetic fibers such as polyester, polyethylene, polyethylene terephthalate, polypropylene, polyamide, aramid, and/or polyaramid fibers may be present in the insulation product in addition to the glass fibers. The term "natural fiber" as used in conjunction with the present invention refers to plant fibers extracted from any part of a plant, including, but not limited to, the stem, seeds, leaves, roots, or phloem. Examples of natural fibers suitable for use as the reinforcing fiber material include cotton, jute, bamboo, ramie, bagasse, hemp, coir, linen, kenaf, sisal, flax, henequen, and combinations thereof. Fibrous insulation products may be formed entirely of one type of fiber, or they may be formed of a combination of different types of fibers. For example, the fibrous insulation product may be formed of combinations of various types of glass fibers or various combinations of different inorganic fibers and/or natural fibers depending on the desired application for the insulation. The embodiments described herein are with reference to insulation products formed entirely of glass fibers.

In the illustrated embodiment, the fibrous insulation product 100 is a generally box-shaped fiberglass insulation batt. In other embodiments, however, the insulation product can be any suitable shape or size, such as for example, a rolled product or a blanket. As an insulation batt or blanket, the fibrous insulation product 100 may be placed in the insulation cavities of buildings. For example, the fibrous insulation product 100 may be placed in the space or cavity between two parallel, spaced apart framing members in a wall, roof, or floor frame of a building.

The fibrous insulation product 100 includes an insulation layer 102 comprising nonwoven glass fibers and a binder to adhere the glass fibers together. Optionally, the fibrous insulation product 100 may also include a facing 104 attached or otherwise adhered to the insulation layer 102. The fibrous insulation product 100 includes a first side surface 106, a second side surface 108 spaced apart from and opposite the first side surface 106, a third side surface 110 extending between the first side surface 106 and the second side surface 108, and a fourth side surface 112 spaced apart from and opposite the third side surface 110 and extending between the first side surface 106 and the second side surface 108. The fibrous insulation product 100 also includes a first face 114 connecting the side surfaces 106, 108, 110, 112 and a second face 116 parallel to, or generally parallel to, and opposite the first face 114 and connecting the side surfaces 106, 108, 110, 112. The fibrous insulation product 100, when uncompressed, has a length L₁, a width W₁, and a thickness T₁. In some embodiments, the length L₁ is greater than the width W₁ which is greater than the thickness T₁.

The facing 104 may be disposed on the insulation layer 102 to form the entirety of, or a portion of, the first face 114, the second face 116, or both faces of the fibrous insulation product 100. The facing 104 may take a wide variety of different forms. The facing 104 can be a single piece or multiple different pieces or sheets of material and may include a single layer or several layers of material. In the exemplary embodiment of FIG. 1, the facing 104 is a single piece of material that connects the side surfaces 106, 108, 110, 112.

The facing 104 may be made from a variety of different materials. Any material suitable for use with a fibrous insulation product may be used. For example, the facing 104 may comprise nonwoven fiberglass and polymeric media; woven fiberglass and polymeric media; sheathing materials, such as sheathing films made from polymeric materials; scrim; cloth; fabric; fiberglass reinforced kraft paper (FRK); a foil-scrim-kraft paper laminate; recycled paper; and calendared paper.

A significant amount of the insulation placed in the insulation cavities of buildings is in the form of insulation blankets rolled from insulation products such as those described herein. Faced insulation products are installed with the facing 104 placed flat on the edge of the insulation cavity, typically on the interior side of the insulation cavity. Insulation products where the facing is a vapor retarder are commonly used to insulate wall, floor, or ceiling cavities that separate a warm interior space from a cold exterior space. The vapor retarder is placed on one side of the insulation product to retard or prohibit the movement of water vapor through the insulation product.

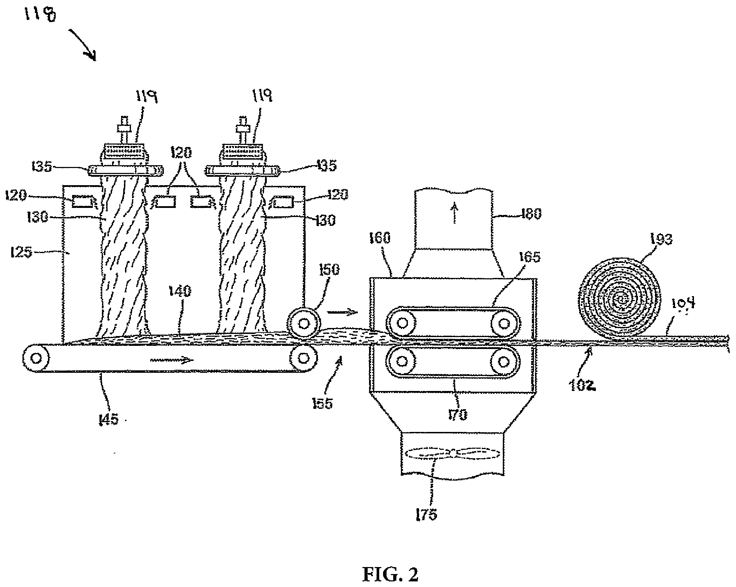

FIG. 2 illustrates an exemplary embodiment of an apparatus 118 for manufacturing the fibrous insulation product 100. The manufacture of the fibrous insulation product 100 may be carried out in a continuous process by fiberizing molten glass, coating the molten glass fibers with a binder, forming a fibrous glass pack on a moving conveyor, and curing the binder to form an insulation blanket as depicted in FIG. 2. Glass may be melted in a tank (not shown) and supplied to a fiber forming device, such as one or more fiberizing spinners 119. Although spinners 119 are shown as the fiber forming device in the exemplary embodiment, it will be understood that other types of fiber forming units may be used to form the fibrous insulation product 100. The spinners 119 are rotated at high speeds. Centrifugal force causes the molten glass to pass through small orifices in the circumferential sidewalls of the fiberizing spinners 119 to form glass fibers. Glass fibers 130 of random lengths may be attenuated from the fiberizing spinners 119 and blown generally downwardly (i.e., generally perpendicular to the plane of the spinners 119) by blowers 120 positioned within a forming chamber 125.

The blowers 120 turn the glass fibers 130 downward. The glass fibers 130, while in transit downward in the forming chamber 125 and while still hot from the drawing operation, are sprayed with an aqueous binder composition by an annular spray ring 135 so as to result in a relatively even distribution of the binder composition throughout the glass fibers 130. Water may also be applied to the glass fibers 130 in the forming chamber 125, such as by spraying, prior to the application of the binder composition to at least partially cool the glass fibers 130.

The glass fibers 130 having the uncured resinous binder composition adhered thereto may be gathered and formed into a fibrous pack 140 on an endless forming conveyor 145 within the forming chamber 125 with the aid of a vacuum (not shown) drawn through the fibrous pack 140 from below the forming conveyor 145. The residual heat from the glass fibers 130 and the flow of air through the fibrous pack 140 during the forming operation are generally sufficient to volatilize a majority of the water from the binder before the glass fibers 130 exit the forming chamber 125, thereby leaving the remaining components of the binder composition on the glass fibers 130 as a viscous or semi-viscous high-solids liquid.

The resin-coated fibrous pack 140, which is in a compressed state due to the flow of air through the fibrous pack 140 in the forming chamber 125, is then transferred out of the forming chamber 125 under exit roller 150 to a transfer zone 155 where the fibrous pack 140 vertically expands due to the resiliency of the glass fibers 130. The expanded fibrous pack 140 is then heated, such as by conveying the fibrous pack 140 through a curing oven 160 where heated air is blown through the fibrous pack 140 to evaporate any remaining water in the binder composition, cure the binder composition, and rigidly bond the glass fibers 130 together. The curing oven 160 includes a foraminous upper oven conveyor 165 and a foraminous lower oven conveyor 170, between which the fibrous pack 140 is drawn. Heated air is forced through the lower oven conveyor 170, the fibrous pack 140, and the upper oven conveyor 165 by a fan 175. The heated air exits the curing oven 160 through an exhaust apparatus 180.

Also, in the curing oven 160, the fibrous pack 140 may be compressed by the upper and lower foraminous oven conveyors 165, 170 to form the insulation layer 102 of the fibrous insulation product 100. The upper and lower oven conveyors 165, 170 may be used to compress the fibrous pack 140 to give the insulation layer 102 its predetermined thickness T₁. It is to be appreciated that although FIG. 2 depicts the conveyors 165, 170 as being in a substantially parallel orientation, they may alternatively be positioned at an angle relative to each other (not illustrated).

The cured binder composition imparts strength and resiliency to the insulation layer 102. It is to be appreciated that the drying and curing of the binder composition may be carried out in either one or two different steps. The two stage (two-step) process is commonly known as B-staging. The curing oven 160 may be operated at a temperature from 100° C. to 325° C., or from 250° C. to 300° C. The fibrous pack 140 may remain within the curing oven 160 for a period of time sufficient to crosslink (cure) the binder composition and form the insulation layer 102.

Once the insulation layer 102 exits the curing oven 160, a facing material 193 may be placed on the insulation layer 102 to form the facing layer 104. The facing material 193 may be adhered to the first face 114, to the second face 116, or both faces of the insulation layer 102 by a bonding agent (not shown) or some other means (e.g., stitching, mechanical entanglement) to form the fibrous insulation product 100. Suitable bonding agents include adhesives, polymeric resins, asphalt, and bituminous materials that can be coated or otherwise applied to the facing material 193. The fibrous insulation product 100 may subsequently be rolled for storage and/or shipment or cut into predetermined lengths by a cutting device (not illustrated). It is to be appreciated that, in some exemplary embodiments, the insulation layer 102 that emerges from the curing oven 160 is rolled onto a take-up roll or cut into sections having a desired length and is not faced with a facing material 193.

**In** the context of the fibrous insulation product 100, a "binder composition" refers to organic agents or chemicals, often polymeric resins, used to adhere the glass fibers 130 to one another in a three-dimensional structure. The binder composition may be in any form, such as a solution, an emulsion, or dispersion. "Binder dispersions" or "binder emulsions" thus refer to mixtures of binder chemicals in a medium or vehicle. As used herein, the terms "binder composition," "aqueous binder composition," "binder formulation," "binder," and "binder system' may be used interchangeably and are synonymous. Additionally, as used herein, the terms "formaldehyde-free" or "no added formaldehyde" may be used interchangeably and are synonymous.

A wide variety of binder compositions may be used with the glass fibers of the present invention. For example, binder compositions fall into two broad, mutually exclusive classes: thermoplastic and thermosetting. Both thermoplastic and thermosetting binder compositions may be used with the invention. A thermoplastic material may be repeatedly heated to a softened or molten state and will return to its former state upon cooling. In other words, heating may cause a reversible change in the physical state of a thermoplastic material (e.g. from solid to liquid) but it does not undergo any irreversible chemical reaction. Exemplary thermoplastic polymers suitable for use in the fibrous insulation product 100 include, but are not limited to, polyvinyls, polyethylene terephthalate (PET), polypropylene or polyphenylene sulfide (PPS), nylon, polycarbonates, polystyrene, polyamides, polyolefins, and certain copolymers of polyacrylates.

In contrast, the term thermosetting polymer refers to a range of systems which exist initially as liquids but which, on heating, undergo a reaction to form a solid, highly crosslinked matrix. Thus, thermosetting compounds comprise reactant systems--often pairs of reactants--that irreversibly crosslink upon heating. When cooled, they do not regain their former liquid state but remain irreversibly crosslinked.

The reactants useful as thermosetting compounds generally have one or more of several reactive functional groups: e.g. amine, amide, carboxyl or hydroxyl. As used herein, "thermoset compound" (and its derivative clauses like "thermosetting compound," "thermosetting binder" or "thermoset binder") refers to at least one of such reactants, it being understood that two or more may be necessary to form the crosslinking system characteristic of thermosetting compounds. In addition to the principle reactants of the thermosetting compounds, there may be catalysts, process aids, and other additives.

Phenolic/formaldehyde binder compositions are a known thermosetting binder system. The present invention encompasses both traditional phenolic-formaldehyde binder compositions, as well as the more recent formaldehyde-free binder compositions. Formaldehyde-free, thermosetting binder systems may include carboxylic acid (such as, for example, polyacrylic acid) and polyol polymers. An example is the polyacrylic acid/polyol/polyacid binder system described in U.S. Pat. Nos. 6,884,849 and 6,699,945 to Chen et al. A second category of formaldehyde-free, thermosetting binder compositions are referred to as "bio-based" or "natural" binders. "Bio-based binder" and "natural binder" are used interchangeably herein to refer to binder compositions made from nutrient compounds, such as carbohydrates, proteins, or fats, which have much reactive functionality. Because they are made from nutrient compounds, they are environmentally friendly. Bio-based binder compositions are described in more detail in U.S. Pat. Publication No. 2011/0086567 to Hawkins et al., filed October 8, 2010. In some exemplary embodiments, the binder includes Owens-Corning's EcoTouch^{™} binder or EcoPure^{™} binder, Owens Corning's Sustaina^{™} binder, or Knauf's ECOSE^{®} binder.

Alternative reactants useful as thermosetting compounds are triammonium citrate-dextrose systems derived from mixing dextrose monohydrate, anhydrous citric acid, water and aqueous ammonia. Additionally, carbohydrate reactants and polyamine reactants are useful thermosetting compounds, wherein such thermosetting compounds are described in more detail in U.S. Pat. Nos. 8,114,210, 9,505,883 and 9,926,464.

In one exemplary embodiment, the fibrous insulation product 100 includes a binder composition including maltodextrin, citric acid, sodium hypophosphite, and vegetable oil. For example, two exemplary embodiments of a binder composition having maltodextrin, citric acid, sodium hypophosphite and vegetable oil are listed in Table 1 below:

**Table 1: Binder Composition Example 1**

| **Component** | **Formulation Embodiment A (wt.% solids)** |
|---|---|
| Maltodextrin | 50-80% |
| Citric Acid | 20-50% |
| Sodium Hypophosphite | 0.5-10% |
| Nonionic Surfactant | 0-2% |
| Vegetable Oil Blend | 1-20% |
| Amino Silane | 0.05-0.18% |
| Pink Dye | 0-5% |

In another exemplary embodiment, the fibrous insulation product 100 includes a formaldehyde-free aqueous binder composition comprising at least one long-chain polyol, and at least one primary cross-linking agent, and at least one secondary cross-linking agent comprising at least one short-chain polyol.

The long-chain polyol may comprise a polyol having at least two hydroxyl groups having a number average molecular weight of at least 2,000 Daltons, such as a molecular weight between 3,000 Daltons and 4,000 Daltons. In some exemplary embodiments, the long-chain polyol comprises one or more of a polymeric polyhydroxy compound, such as a polyvinyl alcohol, polyvinyl acetate, which may be partially or fully hydrolyzed, or mixtures thereof. Illustratively, when a partially hydrolyzed polyvinyl acetate serves as the polyhydroxy component, an 80% - 89% hydrolyzed polyvinyl acetate may be utilized, such as, for example Poval^{®} 385 (Kuraray America, Inc.) and Sevol^{™} 502 (Sekisui Specialty Chemicals America, LLC), both of which are about 85% (Poval^{®} 385) and 88% (Selvol^{™} 502) hydrolyzed.

The long-chain polyol may be present in the aqueous binder composition in an amount up to about 30% by weight total solids, including without limitation, up to about 28%, 25%, 20%, 18%, 15%, and 13% by weight total solids. In any of the exemplary embodiments, the long-chain polyol is present may be present in the aqueous binder composition in an amount from 2.5% to 30% by weight total solids, including without limitation 5% to 25%, 8% to 20%, 9% to 18%, and 10% to 16%, by weight total solids.

The primary crosslinking agent may be any compound suitable for crosslinking a polyol. In any of the exemplary embodiments, the primary crosslinking agent may have a number average molecular weight greater than 90 Daltons, from about 90 Daltons to about 10,000 Daltons, or from about 190 Daltons to about 5,000 Daltons. In any of the exemplary embodiments, the crosslinking agent may have a number average molecular weight of about 2,000 Daltons to 5,000 Daltons, or about 4,000 Daltons. Non-limiting examples of suitable crosslinking agents include materials having one or more carboxylic acid groups (-COOH), such as polycarboxylic acids (and salts thereof), anhydrides, monomeric and polymeric polycarboxylic acid with anhydride (i.e., mixed anhydrides), and homopolymer or copolymer of acrylic acid, such as polyacrylic acid (and salts thereof) and polyacrylic acid based resins such as QR-1629S and Acumer 9932, both commercially available from The Dow Chemical Company. Acumer 9932 is a polyacrylic acid/sodium hypophosphite resin having a molecular weight of about 4000 and a sodium hypophosphite content of 6-7 % by weight. QR-1629S is a polyacrylic acid/glycerin mixture.

The primary cross-linking agent may, in some instances, be pre-neutralized with a neutralization agent. Such neutralization agents may include organic and/or inorganic bases, such sodium hydroxide, ammonium hydroxide, and diethylamine, and any kind of primary, secondary, or tertiary amine (including alkanol amine). In various exemplary embodiments, the neutralization agents may include at least one of sodium hydroxide and triethanolamine.

In some exemplary embodiments, the primary crosslinking agent is present in the aqueous binder composition in at least 50 wt.%, based on the total solids content of the aqueous binder composition, including, without limitation at least 55 wt.%, at least 60 wt.%, at least 63 wt.%, at least 65 wt.%, at least 70 wt.%, at least 73 wt.%, at least 75 wt.%, at least 78 wt.%, and at least 80 wt.%. In some exemplary embodiments, the primary crosslinking agent is present in the aqueous binder composition in an amount from 50% to 85% by weight, based on the total solids content of the aqueous binder composition, including without limitation 60% to 80% by weight, 62% to 78% by weight, and 65% to 75% by weight.

The aqueous binder composition may further include a short-chain polyol. The short-chain polyol may comprise a water-soluble compound having a molecular weight of less than 2,000 Daltons, including less than 750 Daltons, less than 500 Daltons and having a plurality of hydroxyl (-OH) groups. Suitable short-chain polyol components include sugar alcohols, pentaerythritol, primary alcohols, 2,2-bis(methylol)propionic acid, tri(methylol)propane (TMP), 1,2,4-butanetriol, trimethylolpropane, and short-chain alkanolamines, such as triethanolamine, comprising at least three hydroxyl groups. In any of the embodiments disclosed herein, the polyol may comprise at least 4 hydroxyl groups, or at least five hydroxyl groups.

In some exemplary embodiments, the short-chain polyol serves as a viscosity reducing agent, which breaks down the intra and inter molecular hydrogen bonds between the long-chain polyol molecules (e.g., polyvinyl alcohol) and thus lowers the viscosity of the composition. However, as these small-chain polyol molecules have similar structures to the long-chain polyols, they can react similarly with cross-linking agents, thus they do not negatively impact the binder and product performance.

Sugar alcohol is understood to mean compounds obtained when the aldo or keto groups of a sugar are reduced (e.g. by hydrogenation) to the corresponding hydroxy groups. The starting sugar might be chosen from monosaccharides, oligosaccharides, and polysaccharides, and mixtures of those products, such as syrups, molasses and starch hydrolyzates. The starting sugar also could be a dehydrated form of a sugar. Although sugar alcohols closely resemble the corresponding starting sugars, they are not sugars. Thus, for instance, sugar alcohols have no reducing ability, and cannot participate in the Maillard reaction typical of reducing sugars. In some exemplary embodiments, the sugar alcohol includes glycerol, erythritol, arabitol, xylitol, sorbitol, maltitol, mannitol, iditol, isomaltitol, lactitol, cellobitol, palatinitol, maltotritol, syrups thereof and mixtures thereof. In various exemplary embodiments, the sugar alcohol is selected from glycerol, sorbitol, xylitol, and mixtures thereof. In some exemplary embodiments, the secondary cross-linking agent is a dimeric or oligomeric condensation product of a sugar alcohol. In various exemplary embodiments, the condensation product of a sugar alcohol is isosorbide. In some exemplary embodiments, the sugar alcohol is a diol or glycol.

In some exemplary embodiments, the short-chain polyol is present in the aqueous binder composition in an amount up to about 30% by weight total solids, including without limitation, up to about 25 %, 20%, 18%, 15%, 13%, 11%, and 10% by weight total solids. In some exemplary embodiments, the short-chain polyol is present in the aqueous binder composition in an amount from 0 to 30% by weight total solids, including without limitation 2% to 30%, 3% to 25 %, 5% to 20%, 8% to 18%, and 9% to 15%, by weight total solids.

In various exemplary embodiments, the long-chain polyol, crosslinking agent, and small-chain polyol are present in amounts such that the ratio of the number of molar equivalents of carboxylic acid groups, anhydride groups, or salts thereof to the number of molar equivalents of hydroxyl groups is from about 1/0.05 to about 1/5, such as from about 1/0.08 to about 1/2.0, from about 1/0.1 to about 1/1.5, and from about 1/0.3 to about 1/0.66. It has surprisingly been discovered, however, that within this ratio, the ratio of long-chain polyol to short-chain polyol effects the performance of the binder composition, such as the tensile strength and water solubility of the binder after cure. For instance, it has been discovered that a ratio of long-chain polyol to short-chain polyol between about 0.1/0.9 to about 0.9/0.1, such as between about 0.3/0.7 and 0.7/0.3, or between about 0.4/0.6 and 0.6/0.4 provides a balance of desirable mechanical properties and physical color properties. In various exemplary embodiments, the ratio of long-chain polyol to short-chain polyol is approximately 0.5/0.5. The ratio of long-chain polyol to short-chain polyol may be optimized such that particular properties are optimized, depending on the needs of an end-use application.

In some exemplary embodiments, polyacrylic acid, polyvinyl alcohol, sorbitol, and sodium hypophosphite. For example, an exemplary embodiment of a binder composition including polyacrylic acid, polyvinyl alcohol, sorbitol, and sodium hypophosphite is listed in Table 2 below:

**Table 2: Binder Composition Example 2**

| **Component** | **Formulation Embodiment B (wt.% solids)** |
|---|---|
| Polyacrylic Acid | 60-80% |
| Polyvinyl alcohol "PVOH" | 2.5-30% |
| Sorbitol | 8-30% |
| Sodium Hypophosphite | 2-10% |
| Silane Coupling Agent | 0.1-3% |
| Surfactant (Surfynol, nonionic surfactant, anti-foam, acetylenic diol) | 0.1-1.0% |

In another exemplary embodiment, the fibrous insulation product 100 includes a formaldehyde-free aqueous binder composition comprising at least one primary cross-linking agent and at least one short-chain polyol, as described above, but without further comprising a long-chain polyol.

In such aqueous binder compositions, the cross-linking agent is present in the aqueous binder composition in at least 30.0% by weight, based on the total solids content of the aqueous binder composition, including, without limitation at least 40% by weight, at least 45% by weight, at least 50% by weight, at least 52.0% by weight, at least 54.0% by weight, at least 56.0% by weight, at least 58.0% by weight, and at least 60.0% by weight. In any of embodiments disclosed herein, the cross-linking agent may be present in the aqueous binder composition in an amount from 30% to 85% by weight, based on the total solids content of the aqueous binder composition, including without limitation 50.0% to 70.0% by weight, greater than 50% by weight to 65 % by weight, 52.0% to 62.0% by weight, 54.0% to 60.0% by weight, and 55.0% to 59.0% by weight.

The polyol is present in the aqueous binder composition in an amount up to about 70% by weight total solids, including without limitation, up to about 60%, 55%, 50%, 40%, 35%, 33%, 30%, 27%, 25%, and 20% by weight total solids. In some exemplary embodiments, the polyol is present in the aqueous binder composition in an amount from 2.0% to 65.0% by weight total solids, including without limitation 5.0% to 40.0%, 8.0% to 37.0 %, 10.0% to 34.0%, 12.0% to 32.0%, 15.0% to 30.0%, and 20.0% to 28.0%, by weight total solids.

In various exemplary embodiments, the cross-linking agent and polyol are present in amounts such that the ratio of the number of molar equivalents of carboxylic acid groups, anhydride groups, or salts thereof to the number of molar equivalents of hydroxyl groups is from about 0.6/1 to about 1/0.6, such as from about 0.8/1 to about 1/0.8, or from about 0.9/1 to about 1/0.9.

In any of the embodiments disclosed herein, the aqueous binder composition may be free or substantially free of polyols comprising less than 3 hydroxyl groups, or free or substantially free of polyols comprising less than 4 hydroxyl groups. In any of the embodiments disclosed herein, the aqueous binder composition is free or substantially free of polyols having a number average molecular weight of 2,000 Daltons or above, such as a molecular weight between 3,000 Daltons and 4,000 Daltons. Accordingly, in any of the embodiments disclosed herein, the aqueous binder composition is free or substantially free of diols, such as glycols; triols, such as, for example, glycerol and triethanolamine; and/or polymeric polyhydroxy compounds, such as polyvinyl alcohol, polyvinyl acetate, which may be partially or fully hydrolyzed, or mixtures thereof. Polyvinyl alcohol is a known film former, which causes moisture to release quickly, leading to the formation of a film.

In any of the embodiments disclosed herein, the aqueous binder compositions may comprise or consist of a polymeric polycarboxylic acid-based cross-linking agent and a monomeric polyol having at least four hydroxyl groups with a ratio of carboxylic acid groups to hydroxyl groups OH groups between 0.60/1 to 1/0.6.

**Table 3: Binder Composition Example 3**

| **Component** | **Exemplary Range 1 (% By Weight of Total Solids)** | **Exemplary Range 2 (% By Weight of Total Solids)** |
|---|---|---|
| Polycarboxylic acid | 30 - 85 | 55 - 65 |
| Polyol | 15 - 70 | 20 - 35 |
| Catalyst | 0.5 - 5.0 | 2.0 - 3.5 |
| Coupling agent | 0 - 2.0 | 0.12 - 0.5 |
| Oil Emulsion | 2 - 15 | 8 - 13 |
| Surfactant | 0 - 5.0 | 0.1 - 1.0 |
| Pigment | 0 - 2 | 0.1 - 1.0 |
| Silicone | 0 - 15 | 0.5 - 10.0 |

In any of the aqueous binder compositions disclosed herein, all or a percentage of the acid functionality in the polycarboxylic acid may be temporarily blocked with the use of a protective agent, which temporarily blocks the acid functionality from complexing with the mineral wool fibers, and is subsequently removed by heating the binder composition to a temperature of at least 150 °C, freeing the acid functionalities to crosslink with the polyol component and complete the esterification process, during the curing process. In any of the exemplary embodiments, 10% to 100% of the carboxylic acid functional groups may be temporarily blocked by the protective agent, including between about 25% to about 99%, about 30% to about 90%, and about 40% to 85%, including all subranges and combinations of ranges therebetween. In any of the exemplary embodiments, a minimum of 40% of the acid functional groups may be temporarily blocked by the protective agent.

The protective agent may be capable of reversibly bonding to the carboxylic acid groups of the crosslinking agent. In any of the exemplary embodiments, the protective agent comprises any compound comprising molecules capable of forming at least one reversible ionic bond with a single acid functional group. In any of the exemplary embodiments disclosed herein, the protective agent may comprise a nitrogen-based protective agent, such as an ammonium-based protective agent; an amine-based protective agent; or mixtures thereof. An exemplary ammonium based protective agent includes ammonium hydroxide. Exemplary amine-based protective agents include alkylamines and diamines, such as, for example ethyleneimine, ethylenediamine, hexamethylenediamine; alkanolamines, such as: ethanolamine, diethanolamine, triethanolamine; ethylenediamine-N,N'-disuccinic acid (EDDS), ethylenediaminetetraacetic acid (EDTA), and the like, or mixtures thereof. In addition, the alkanolamine can be used as both a protecting agent and as a participant in the crosslinking reaction to form ester in the cured binder. Thus, the alkanolamine has a dual-functionality of protective agent and polyol for crosslinking with the polycarboxylic acid via esterification.

The protective agent functions differently than a conventional pH adjuster. A protective agent, as defined herein, only temporarily and reversibly blocks the acid functional groups in the polymeric polycarboxylic acid component. In contrast, conventional pH adjusters, such as sodium hydroxide, permanently terminate an acid functional group, which prevents crosslinking between the acid and hydroxyl groups due to the blocked acid functional groups. Thus, the inclusion of traditional pH adjusters, such as sodium hydroxide, does not provide the desired effect of temporarily blocking the acid functional groups, while later freeing up those functional groups during to cure to permit crosslinking via esterification. Accordingly, in any of the exemplary embodiments disclosed herein, the binder composition may be free or substantially free of conventional pH adjusters, such as, for example, sodium hydroxide and potassium hydroxide. Such conventional pH adjusters for high temperature applications will permanently bond with the carboxylic acid groups and will not release the carboxylic acid functionality to allow for crosslinking esterification.

Any of the aqueous binder compositions disclosed herein may further include an additive blend comprising one or more processing additives that improves the processability of the binder composition by reducing the tackiness of the binder, resulting in a more uniform insulation product with an increased tensile strength and hydrophobicity. Although there may be various additives capable of reducing the tackiness of a binder composition, conventional additives are hydrophilic in nature, such that the inclusion of such additives increases the overall water absorption of the binder composition. The additive blend may comprise one or more processing additives. Examples of processing additives include surfactants, glycerol, 1,2,4-butanetriol, 1,4-butanediol, 1,2-propanediol, 1,3-propanediol, poly(ethylene glycol) (e.g., Carbowax^{™}), monooleate polyethylene glycol (MOPEG), silicone, dispersions of polydimethylsiloxane (PDMS), emulsions and/or dispersions of mineral, paraffin, or vegetable oils, waxes such as amide waxes (e.g., ethylene bis-stearamide (EBS)) and carnauba wax (e.g., ML-155), hydrophobized silica, ammonium phosphates, or combinations thereof. The surfactants may include non-ionic surfactants, including non-ionic surfactants with an alcohol functional groups. Exemplary surfactants include Surfynol^{®}, alkyl polyglucosides (e.g., Glucopon^{®}), and alcohol ethoxylates (e.g., Lutensol^{®}).

The additive blend may include a single processing additive, a mixture of at least two processing additives, a mixture of at least three processing additives, or a mixture of at least four processing additives. In any of the embodiments disclosed herein, the additive blend may comprise a mixture of glycerol and polydimethylsiloxane.

The additive blend may be present in the binder composition in an amount from 1.0% to 20% by weight, from 1.25% to 17.0% by weight, or from 1.5% to 15.0% by weight, or from about 3.0% to 12.0% by weight, or from 5.0% to 10.0% by weight based on the total solids content in the binder composition. In any of the exemplary embodiments, the binder composition may comprise at least 7.0% by weight of the additive blend, including at least 8.0% by weight, and at least 9% by weight, based on the total solids content in the binder composition. Accordingly, in any of the exemplary embodiments, the aqueous binder composition may comprise 7.0% to 15% by weight of the additive blend, including 8.0% by weight to 13.5% by weight, 9.0% by weight to 12.5% by weight, based on the total solids content in the binder composition.

In embodiments wherein the additive blend comprises glycerol, the glycerol may be present in an amount from at least 5.0% by weight, or at least 6.0% by weight, or at least 7.0% by weight, or at least 7.5% by weight, based on the total solids content of the binder composition. In any of the exemplary embodiments, the binder composition may comprise 5.0 to 15% by weight of glycerol, including 6.5 to 13.0% by weight, 7.0 to 12.0% by weight, and 7.5 to 11.0% by weight of glycerol, based on the total solids content of the binder composition.

In embodiments wherein the additive blend comprises polydimethylsiloxane, the polydimethylsiloxane may be present in an amount from at least 0.2% by weight, or at least 0.5% by weight, or at least 0.8% by weight, or at least 1.0% by weight, or at least 1.5% by weight, or at least 2.0% by weight, based on the total solids content of the binder composition. In any of the exemplary embodiments, the binder composition may comprise 0.5 to 5.0% by weight of polydimethylsiloxane, including 1.0 to 4.0% by weight, 1.2 to 3.5% by weight, 1.5 to 3.0% by weight, and 1.6 to 2.3% by weight of polydimethylsiloxane, based on the total solids content of the binder composition.

In any of the embodiments disclosed herein, the additive blend may comprise a mixture of glycerol and polydimethylsiloxane, wherein the glycerol comprises 5.0 to 15% by weight of the binder composition and the polydimethylsiloxane comprises 0.5 to 5.0% by weight of the binder composition, based on the total solids content of the binder composition. In any of the embodiments disclosed herein, the additive blend may comprise a mixture of glycerol and polydimethylsiloxane, wherein the glycerol comprises 7.0 to 12% by weight of the binder composition and the polydimethylsiloxane comprises 1.2 to 3.5% by weight of the binder composition, based on the total solids content of the binder composition.

In any of the embodiments disclosed herein, the additive blend may comprise an increased concentration of a silane coupling agent. Conventional binder compositions generally comprise less than 0.5 wt.% silane and more commonly about 0.2 wt.% or less, based on the total solids content of the binder composition. Accordingly, in any of the embodiments disclosed herein, the silane coupling agent(s) may be present in the binder composition in an amount from 0.5% to 5.0 % by weight of the total solids in the binder composition, including from about 0.7% to 2.5% by weight, from 0.85% to 2.0% by weight, or from 0.95% to 1.5% by weight. In any of the embodiments disclosed herein, the silane coupling agent(s) may be present in the binder composition in an amount up to 1.0% by weight.

The silane concentration may further be characterized by the amount of silane on the fibers in a fibrous insulation product. Typically, fiberglass insulation products comprise between 0.001% by weight and 0.03% by weight of the silane coupling agent on the glass fibers. However, by increasing the amount of silane coupling agent that is included applied to the fibers, the amount of silane on the glass fibers increases to at least 0.10% by weight.

Alternatively, the binder composition may comprise a conventional amount of silane coupling agent, if any. In such embodiments, the silane coupling agent(s) may be present in the binder composition in an amount from 0 to less than 0.5% by weight of the total solids in the binder composition, including from 0.05% to 0.4% by weight, from 0.1% to 0.35% by weight, or from 0.15% to 0.3% by weight.

Non-limiting examples of silane coupling agents that may be used in the binder composition may be characterized by the functional groups alkyl, aryl, amino, epoxy, vinyl, methacryloxy, ureido, isocyanato, and mercapto. In exemplary embodiments, the silane coupling agent(s) include silanes containing one or more nitrogen atoms that have one or more functional groups such as amine (primary, secondary, tertiary, and quaternary), amino, imino, amido, imido, ureido, or isocyanato. Specific, non-limiting examples of suitable silane coupling agents include, but are not limited to, aminosilanes (e.g., triethoxyaminopropylsilane; 3-aminopropyl-triethoxysilane and 3-aminopropyl-trihydroxysilane), epoxy trialkoxysilanes (e.g., 3-glycidoxypropyltrimethoxysilane and 3-glycidoxypropyltriethoxysilane), methyacryl trialkoxysilanes (e.g., 3-methacryloxypropyltrimethoxysilane and 3-methacryloxypropyltriethoxysilane), hydrocarbon trialkoxysilanes, amino trihydroxysilanes, epoxy trihydroxysilanes, methacryl trihydroxy silanes, and/or hydrocarbon trihydroxysilanes. In one or more exemplary embodiment, the silane is an aminosilane, such as γ-aminopropyltriethoxysilane.

Any of the aqueous binder compositions disclosed herein may further include an esterification catalyst, also known as a cure accelerator. The catalyst may include inorganic salts, Lewis acids (i.e., aluminum chloride or boron trifluoride), Bronsted acids (i.e., sulfuric acid, p-toluenesulfonic acid and boric acid) organometallic complexes (i.e., lithium carboxylates, sodium carboxylates), and/or Lewis bases (i.e., polyethyleneimine, diethylamine, or triethylamine). Additionally, the catalyst may include an alkali metal salt of a phosphorous-containing organic acid; in particular, alkali metal salts of phosphorus acid, hypophosphorus acid, or polyphosphoric. Examples of such phosphorus catalysts include, but are not limited to, sodium hypophosphite, sodium phosphate, potassium phosphate, disodium pyrophosphate, tetrasodium pyrophosphate, sodium tripolyphosphate, sodium hexametaphosphate, potassium phosphate, potassium tripolyphosphate, sodium trimetaphosphate, sodium tetrametaphosphate, and mixtures thereof. In addition, the catalyst or cure accelerator may be a fluoroborate compound such as fluoroboric acid, sodium tetrafluoroborate, potassium tetrafluoroborate, calcium tetrafluoroborate, magnesium tetrafluoroborate, zinc tetrafluoroborate, ammonium tetrafluoroborate, and mixtures thereof. Further, the catalyst may be a mixture of phosphorus and fluoroborate compounds. Other sodium salts such as, sodium sulfate, sodium nitrate, sodium carbonate may also or alternatively be used as the catalyst.

The catalyst may be present in the aqueous binder composition in an amount from about 0% to about 10% by weight of the total solids in the binder composition, including without limitation, amounts from about 1% to about 5% by weight, or from about 2% to about 4.5% by weight, or from about 2.8% to about 4.0% by weight, or from about 3.0% to about 3.8% by weight.

Optionally, the aqueous binder composition may contain at least one coupling agent. In at least one exemplary embodiment, the coupling agent is a silane coupling agent. The coupling agent(s) may be present in the binder composition in an amount from about 0.01% to about 5 % by weight of the total solids in the binder composition, from about 0.01% to about 2.5% by weight, from about 0.05% to about 1.5% by weight, or from about 0.1% to about 1.0% by weight.

Non-limiting examples of silane coupling agents that may be used in the binder composition may be characterized by the functional groups alkyl, aryl, amino, epoxy, vinyl, methacryloxy, ureido, isocyanato, and mercapto. In any of the embodiments, the silane coupling agent(s) may include silanes containing one or more nitrogen atoms that have one or more functional groups such as amine (primary, secondary, tertiary, and quaternary), amino, imino, amido, imido, ureido, or isocyanato. Specific, non-limiting examples of suitable silane coupling agents include, but are not limited to, aminosilanes (e.g., triethoxyaminopropylsilane; 3-aminopropyl-triethoxysilane and 3-aminopropyl-trihydroxysilane), epoxy trialkoxysilanes (e.g., 3-glycidoxypropyltrimethoxysilane and 3-glycidoxypropyltriethoxysilane), methyacryl trialkoxysilanes (e.g., 3-methacryloxypropyltrimethoxysilane and 3-methacryloxypropyltriethoxysilane), hydrocarbon trialkoxysilanes, amino trihydroxysilanes, epoxy trihydroxysilanes, methacryl trihydroxy silanes, and/or hydrocarbon trihydroxysilanes. In any of the embodiments disclosed herein, the silane may comprise an aminosilane, such as γ-aminopropyltriethoxysilane.

The aqueous binder composition may further include a process aid. The process aid is not particularly limiting so long as the process aid functions to facilitate the processing of the fibers formation and orientation. The process aid can be used to improve binder application distribution uniformity, to reduce binder viscosity, to increase ramp height after forming, to improve the vertical weight distribution uniformity, and/or to accelerate binder de-watering in both forming and oven curing process. The process aid may be present in the binder composition in an amount from 0 to about 10.0% by weight, from about 0.1% to about 5.0% by weight, or from about 0.3% to about 2.0% by weight, or from about 0.5% to 1.0% by weight, based on the total solids content in the binder composition. In some exemplary embodiments, the aqueous binder composition is substantially or completely free of any process aids.

Examples of process aids include defoaming agents, such as, emulsions and/or dispersions of mineral, paraffin, or vegetable oils; dispersions of polydimethylsiloxane (PDMS) fluids, and silica which has been hydrophobized with polydimethylsiloxane or other materials. Further process aids may include particles made of amide waxes such as ethylene bis-stearamide (EBS) or hydrophobized silica. A further process aid that may be utilized in the binder composition is a surfactant. One or more surfactants may be included in the binder composition to assist in binder atomization, wetting, and interfacial adhesion.

The surfactant is not particularly limited, and includes surfactants such as, but not limited to, ionic surfactants (e.g., sulfate, sulfonate, phosphate, and carboxylate); sulfates (e.g., alkyl sulfates, ammonium lauryl sulfate, sodium lauryl sulfate (SDS), alkyl ether sulfates, sodium laureth sulfate, and sodium myreth sulfate); amphoteric surfactants (e.g., alkylbetaines such as lauryl-betaine); sulfonates (e.g., dioctyl sodium sulfosuccinate, perfluorooctanesulfonate, perfluorobutanesulfonate, and alkyl benzene sulfonates); phosphates (e.g., alkyl aryl ether phosphate and alkyl ether phosphate); carboxylates (e.g., alkyl carboxylates, fatty acid salts (soaps), sodium stearate, sodium lauroyl sarcosinate, carboxylate fluorosurfactants, perfluoronanoate, and perfluorooctanoate); cationic (e.g., alkylamine salts such as laurylamine acetate); pH dependent surfactants (primary, secondary or tertiary amines); permanently charged quaternary ammonium cations (e.g., alkyltrimethylammonium salts, cetyl trimethylammonium bromide, cetyl trimethylammonium chloride, cetylpyridinium chloride, and benzethonium chloride); and zwitterionic surfactants, quaternary ammonium salts (e.g., lauryl trimethyl ammonium chloride and alkyl benzyl dimethylammonium chloride), and polyoxyethylenealkylamines.

Suitable nonionic surfactants that can be used in conjunction with the binder composition include polyethers (e.g., ethylene oxide and propylene oxide condensates, which include straight and branched chain alkyl and alkaryl polyethylene glycol and polypropylene glycol ethers and thioethers); alkylphenoxypoly(ethyleneoxy)ethanols having alkyl groups containing from about 7 to about 18 carbon atoms and having from about 4 to about 240 ethyleneoxy units (e.g., heptylphenoxypoly(ethyleneoxy) ethanols, and nonylphenoxypoly(ethyleneoxy) ethanols); polyoxyalkylene derivatives of hexitol including sorbitans, sorbides, mannitans, and mannides; partial long-chain fatty acids esters (e.g., polyoxyalkylene derivatives of sorbitan monolaurate, sorbitan monopalmitate, sorbitan monostearate, sorbitan tristearate, sorbitan monooleate, and sorbitan trioleate); condensates of ethylene oxide with a hydrophobic base, the base being formed by condensing propylene oxide with propylene glycol; sulfur containing condensates (e.g., those condensates prepared by condensing ethylene oxide with higher alkyl mercaptans, such as nonyl, dodecyl, or tetradecyl mercaptan, or with alkylthiophenols where the alkyl group contains from about 6 to about 15 carbon atoms); ethylene oxide derivatives of long-chain carboxylic acids (e.g., lauric, myristic, palmitic, and oleic acids, such as tall oil fatty acids); ethylene oxide derivatives of long-chain alcohols (e.g., octyl, decyl, lauryl, or cetyl alcohols); and ethylene oxide/propylene oxide copolymers.

In at least one exemplary embodiment, the surfactants include one or more of Dynol 607, which is a 2,5,8,11-tetramethyl-6-dodecyne-5,8-diol, SURFONYL^{®} 420, SURFONYL^{®} 440, and SURFONYL^{®} 465, which are ethoxylated 2,4,7,9-tetramethyl-5-decyn-4,7-diol surfactants (commercially available from Evonik Corporation (Allentown, Pa.)), Stanfax (a sodium lauryl sulfate), Surfynol 465 (an ethoxylated 2,4,7,9-tetramethyl 5 decyn-4,7-diol), Triton^{™} GR-PG70 (1,4-bis(2-ethylhexyl) sodium sulfosuccinate), and Triton^{™} CF-10 (poly(oxy-1,2-ethanediyl), alpha-(phenylmethyl)-omega-(1,1,3,3-tetramethylbutyl)phenoxy).

Optionally, the aqueous binder composition may contain a dust suppressing agent to reduce or eliminate the presence of inorganic and/or organic particles which may have adverse impact in the subsequent fabrication and installation of the insulation materials. The dust suppressing agent can be any conventional mineral oil, mineral oil emulsion, natural or synthetic oil, bio-based oil, or lubricant, such as, but not limited to, silicone and silicone emulsions, polyethylene glycol, as well as any petroleum or non-petroleum oil with a high flash point to minimize the evaporation of the oil inside the oven.

The aqueous binder composition may include up to about 15 wt.% of a dust suppressing agent, including up to about 14 wt. %, or up to about 13 wt.%. In any of the embodiments disclosed herein, the aqueous binder composition may include between 1.0 wt.% and 15 wt.% of a dust suppressing agent, including about 3.0 wt.% to about 13.0 wt.%, or about 5.0 wt.% to about 12.8 wt.%.

The aqueous binder composition may also optionally include organic and/or inorganic acids and bases as pH adjusters in an amount sufficient to adjust the pH to a desired level. The pH may be adjusted depending on the intended application, to facilitate the compatibility of the ingredients of the binder composition, or to function with various types of fibers. In some exemplary embodiments, the pH adjuster is utilized to adjust the pH of the binder composition to an acidic pH. Examples of suitable acidic pH adjusters include inorganic acids such as, but not limited to sulfuric acid, phosphoric acid and boric acid and also organic acids like p-toluenesulfonic acid, mono- or polycarboxylic acids, such as, but not limited to, citric acid, acetic acid and anhydrides thereof, adipic acid, oxalic acid, and their corresponding salts. Also, inorganic salts that can be acid precursors. The acid adjusts the pH, and in some instances, as discussed above, acts as a cross-linking agent. Organic and/or inorganic bases can be included to increase the pH of the binder composition. The bases may be volatile or non-volatile bases. Exemplary volatile bases include, for example, ammonia and alkyl-substituted amines, such as methyl amine, ethyl amine or 1-aminopropane, dimethyl amine, and ethyl methyl amine. Exemplary non-volatile bases include, for example, sodium hydroxide, potassium hydroxide, sodium carbonate, and t-butylammonium hydroxide.

When in an un-cured state, the pH of the binder composition may range from about 2.0 to about 5.0, including all amounts and ranges in between. In any of the embodiments disclosed herein, the pH of the binder composition, when in an un-cured state, is about 2.2 - 4.0, including about 2.5 - 3.8, and about 2.6 - 3.5. After cure, the pH of the binder composition may rise to at least a pH of 5.0, including levels between about 6.5 and 8.8, or between about 6.8 and 8.2.

The binder further includes water to dissolve or disperse the active solids for application onto the reinforcement fibers. Water may be added in an amount sufficient to dilute the aqueous binder composition to a viscosity that is suitable for its application to the reinforcement fibers and to achieve a desired solids content on the fibers. It has been discovered that the present binder composition may contain a lower solids content than traditional phenol-urea formaldehyde or carbohydrate-based binder compositions. In particular, the binder composition may comprise 5 % to 35% by weight of binder solids, including without limitation, 10% to 30%, 12% to 20%, and 15% to 19% by weight of binder solids. This level of solids indicates that the subject binder composition may include more water than traditional binder compositions.

In some exemplary embodiments, the binder composition can be processed at a high ramp moisture level (about 8%-10%) and requires less moisture removal than traditional binder compositions. However, in some exemplary embodiments, the binder composition may have a low viscosity, which allows for a reduction in the ramp moisture level. In some exemplary embodiments, the aqueous binder composition demonstrates a viscosity, at a temperature of 25 °C, no greater than 70 cP at 25 °C and 40% solids or less, such as no greater than 65 cP, no greater than 60 cP, no greater than 55 cP, or no greater than 50 cP. A low binder viscosity allows for a reduction in ramp moisture to less than 8%, less than 7%, less than 6%, less than 5%, less than 4%, less than 3%, less than 2%, or less than 1% ramp moisture level. In some exemplary embodiment, the ramp moisture is zero or essentially zero, meaning a ramp moisture level of no greater than 0.5%. A binder composition having a viscosity as low as possible applied at a high concentration allows for the removal of high amounts of moisture on the ramp, allowing the preparation of a tough binder without brittleness.

In other exemplary embodiments, the aqueous binder composition demonstrates a viscosity, at a temperature of 25 °C, between 200 cP and 600 cP at 25 °C and 40% solids, including between 300 cP and 500 cP at 25 °C and 40% solids, and between 350 cP and 450 cP at 25 °C and 40% solids.

The binder content may be measured as loss on ignition (LOI). In any of the embodiments disclosed herein, the LOI is 1% to 20%, including without limitation, 5.5% to 17%, 8% to 15%, and 10% to 14.5%. The particular LOI of a product is largely dependent on the type of product being produced.

The binder composition may be present in an amount of less than or equal to 10% by weight of the fibrous insulation product 100, or less than or equal to 8% by weight of the fibrous insulation product 100 or less than or equal to 6% by weight of the fibrous insulation product 100. In one exemplary embodiment, the fibrous insulation product 100 includes a collection of unwoven glass fibers and less than 10% by weight of a formaldehyde-free binder. In some exemplary embodiments, the cured fibrous insulation product 100 has in the range of from 2% by weight to 10% by weight of the binder composition. In some exemplary embodiments, the cured fibrous insulation product 100 has in the range of from 3.5% by weight to 6% by weight of the binder composition, or in the range of 3.5% to 4% by weight of the binder composition. The relatively low amount of binder contributes to the flexibility of the final insulation product.

In an exemplary embodiment, the fibrous insulation product 100 may be formed as a residential insulation product, such as an insulation batt, that has properties, such as recovery, stiffness, handling, etc., which are suitable for use as residential insulation. The fibrous insulation product 100, however, utilizes glass fibers 130 having a smaller diameter than the glass fibers used in conventional residential fiberglass insulation products, which have fiber diameters typically greater than 4 µm (15.7 HT). In particular, the exemplary fibrous insulation product 100 may include glass fibers 130 having an average fiber diameter, prior to the application of the binder composition, in the range of 2.03 µm (8.0 HT) to 3.04 µm (12.0 HT), or in the range of 2.29 µm (9.0 HT) to 3.04 µm (12.0 HT), or in the range of 2.03 µm (8.0 HT) to 2.79 µm (11.0 HT).

The procedure used to measure the fiber diameters of the glass fibers 130 utilizes a scanning electron microscope (SEM) to directly measure fiber diameter. In general, a specimen of the fibrous insulation product 100 is heated to remove any organic materials (*e.g.,* binder composition), the glass fibers from the specimen are then reduced in length and photographed by the SEM. The diameters of the fibers are then measured from the saved images by imaging software associated with the SEM.

More specifically, a specimen of the fibrous insulation product 100 is heated to 800 degrees F (426.7 °C) for a minimum of 30 minutes. The specimen may be heated longer if required to ensure removal of any organic materials. The specimen is them cooled to room temperature and the glass fibers are reduced in length in order to fit onto an SEM planchette. The glass fibers may be reduced in length by any suitable method, such as for example, cut by scissors, chopped by a razor blade, or ground in a mortar and pestle. The glass fibers are then adhered to the surface of the Sem planchette such that the fibers are not overlapping or spaced too far apart.

Once the specimen is prepared for imaging, the specimen is mounted in the SEM using normal operating procedures and photographed by the SEM at appropriate magnification for the diameter size of the fibers being measured. A sufficient number of images are collected and saved to ensure enough fibers are available for measuring. For example, 10 to 13 images may be required where 250 to 300 fibers are being measured. The fiber diameters are then measured using an SEM image analysis software program, such as for example, Scandium SIS imaging software. Average fiber diameter of the specimen is then determined from the number of fibers measured. The fibrous insulation product specimen may include glass fibers that are fused together (*i.e.,* two or more fibers joined along their lengths). For the purpose of calculating the average fiber diameter of specimens in the present disclosure, fused fibers are treated as single fibers.

An alternative procedure used to measure the average fiber diameter of the glass fibers 130 utilizes a device that measures air flow resistance to indirectly determine the mean or "effective" fiber diameter of the randomly distributed fibers in a specimen. More specifically, in one embodiment of the alternative procedure, a specimen of the fibrous insulation product 100 is heated to 800-1000 degrees F (426.7 - 537.8 °C) for 30 minutes. The specimen may be heated longer if required to ensure removal of any organic materials. The specimen is then cooled to room temperature and a test specimen weighing about 7.50 grams is loaded into the device's chamber. A constant air flow is applied through the chamber, and once the air flow has stabilized, the differential pressure, or pressure drop, is measured by the device. Based on the air flow and differential pressure measurements, the device can compute the average fiber diameter of the specimen.

Utilizing fine glass fibers 130, as described above, the exemplary fibrous insulation product 100 may be formed as a batt or blanket having appropriate R-values, such as in the range of 10 to 54, and thicknesses, such as for example in the range of 2 inches to 18 inches (5.1 cm to 45.7 cm), for use as residential or commercial insulation by tailoring certain properties of the product, such as fiber diameter, density (pcf), product area weight (pounds per square foot), and binder content. For example, an insulation batt having a thickness of 3.5 inch (8.9 cm) and R-value of 11 may be formed utilizing glass fibers 130 having an average fiber diameter of less than or equal to 4 µm by matching the density (pcf) and product area weight (pounds per square foot) to a specific fiber diameter and binder content.

The density of the fibrous insulation product 100 may vary in different embodiments. As used in this application, the density of the fibrous insulation product is the density after the binder composition has been cured and the cured product being in a free state (*i.e.,* not compressed or stretched). In various embodiments, the density of the fibrous insulation product 100 is in the range of 0.3 pcf to 2.7 pcf (4.8 kg/m³ to 43.2 kg/m³). Table 4 lists the original density, in pcf, for various exemplary embodiments of fibrous insulation products 100 having fine fibers in the range of 2.03 µm (8.0 HT) to 3.04 µm (12.0 HT). In Table 4, the fiber diameters refer to an average fiber diameter, prior to the application of the binder composition, as measured by the air flow resistance method described above. The thickness and original density refer to the thickness and density of the product after the binder composition has been cured and the cured product being in a free state (*i.e*., not compressed or stretched). HT can be converted to µm using the formula: µm = HT x 0.254. Inches can be converted to cm using the formula: cm = inch x 2.54.

**Table 4: Original Density (pcf) per Fiber Diameter, R-Value, Binder Content, and Thickness**

| | | | | | | | | | |
|---|---|---|---|---|---|---|---|---|---|
| Thickness (inches) | 3.50 | 3.50 | 3.50 | 6.25 | 5.50 | 5.50 | 9.50 | 12.00 | 14.00 |
| Binder Content (% wt) | 5.50 | 5.50 | 4.00 | 5.50 | 5.50 | 4.00 | 5.50 | 5.50 | 4.00 |
| R-Value | R11 | R13 | R15 | R19 | R20 | R21 | R30 | R38 | R49 |

| Fiber Diameter (HT) | | | | | | | | | |
|---|---|---|---|---|---|---|---|---|---|
| 8 | 0.353 | 0.549 | 0.950 | 0.326 | 0.513 | 0.589 | 0.355 | 0.357 | 0.453 |
| 9 | 0.363 | 0.569 | 0.987 | 0.336 | 0.530 | 0.611 | 0.366 | 0.369 | 0.468 |
| 10 | 0.377 | 0.590 | 1.025 | 0.348 | 0.550 | 0.631 | 0.379 | 0.381 | 0.483 |
| 11 | 0.387 | 0.607 | 1.063 | 0.359 | 0.567 | 0.652 | 0.392 | 0.394 | 0.500 |
| 12 | 0.401 | 0.627 | 1.097 | 0.371 | 0.585 | 0.674 | 0.403 | 0.406 | 0.515 |

The data in Table 4 shows fibrous insulation products having R-values from 11 to 49 produced with average fiber diameters in the range of 2.03 µm (8.0 HT) to 3.04 µm (12.0 HT), original densities in the range of 0.326 pcf to 1.097 pcf (5.222 kg/m³ to 17.572 kg/m³), and less than or equal to 6% by weight of the binder composition. In exemplary embodiments, the fibrous insulation product may be a batt having an uncompressed thickness of 3.5 inches (8.9 cm) or less, an R-value of 11 or greater, and an original density less than or equal to 0.41 pcf (6.57 kg/m³); an uncompressed thickness of 3.5 inches (8.9 cm) or less, an R-value of 13 or greater, and an original density less than or equal to 0.63 pcf (10.09 kg/m³); an uncompressed thickness of 3.5 inches (8.9 cm) or less, an R-value of 15 or greater, and an original density is less than or equal to 1.1 pcf (17.6 kg/m³); an uncompressed thickness of 6.25 inches (15.88 cm) or less, an R-value of 19 or greater, and an original density less than or equal to 0.38 pcf (6.09 kg/m³); an uncompressed thickness of 5.5 inches (14.0 cm) or less, an R-value of 20 or greater, and an original density less than or equal to 0.59 pcf (9.45 kg/m³); an uncompressed thickness of 5.5 inches (14.0 cm) or less, an R-value of 21 or greater, and an original density less than or equal to 0.68 pcf (10.89 kg/m³); an uncompressed thickness of 9.5 inches (24.1 cm) or less, an R-value of 30 or greater, and an original density less than or equal to 0.41 pcf (6.57 kg/m³); an uncompressed thickness of 12.0 inches (30.5 cm) or less, an R-value of 38 or greater, and an original density less than or equal to 0.41 pcf (6.57 kg/m³); or an uncompressed thickness of 14.0 inches (35.6 cm) or less, an R-value of 49 or greater, and an original density less than or equal to 0.52 pcf (8.33 kg/m³). In another exemplary embodiment, the fibrous insulation product may be a batt having an uncompressed thickness of 3.5 inches (8.9 cm) or less, an R-value of 16 or greater, average fiber diameters in the range of 2.03 µm (8.0 HT) to 3.04 µm (12.0 HT), less than or equal to 3.5% by weight of the binder, and an original density less than or equal to 1.90 pcf (30.44 kg/m³) or less than or equal to 2.0 pcf (32.0 kg/m³). In other exemplary embodiments, the fibrous insulation product may be a batt having average fiber diameters in the range of 2.03 µm (8.0 HT) to 3.04 µm (12.0 HT) and less than or equal to 10% by weight of the binder.

Table 5 illustrates the original area weights, in pounds per square foot (psf) of exemplary embodiments of fibrous insulation products 100 having fine fibers in the range of 2.03 µm (8.0 HT) to 3.04 µm (12.0 HT). In Table 5, the fiber diameters refer to an average fiber diameter, prior to the application of the binder composition, as measured by the air flow resistance method described above, and measured as discussed above and the thickness and original area weight refer to the thickness and area weight (pounds per square foot) of the product after the binder composition has been cured and the cured product being in a free state (*i.e.,* not compressed or stretched).

**Table 5: Original Area Weight (psf) per Fiber Diameter, R-Value, Binder Content, and Thickness**

| | | | | | | | | | |
|---|---|---|---|---|---|---|---|---|---|
| Thickness (inches) | 3.50 | 3.50 | 3.50 | 6.25 | 5.50 | 5.50 | 9.50 | 12.00 | 14.00 |
| Binder Content (% wt) | 5.50 | 5.50 | 4.00 | 5.50 | 5.50 | 4.00 | 5.50 | 5.50 | 4.00 |
| R-Value | R11 | R13 | R15 | R19 | R20 | R21 | R30 | R38 | R49 |

| Fiber Diameter (HT) | | | | | | | | | |
|---|---|---|---|---|---|---|---|---|---|
| 8 | 0.103 | 0.154 | 0.277 | 0.170 | 0.235 | 0.270 | 0.281 | 0.357 | 0.528 |
| 9 | 0.106 | 0.166 | 0.288 | 0.175 | 0.243 | 0.280 | 0.290 | 0.369 | 0.546 |
| 10 | 0.110 | 0.172 | 0.299 | 0.181 | 0.252 | 0.289 | 0.300 | 0.381 | 0.564 |
| 11 | 0.113 | 0.177 | 0.310 | 0.187 | 0.260 | 0.299 | 0.310 | 0.394 | 0.583 |
| 12 | 0.117 | 0.183 | 0.320 | 0.193 | 0.268 | 0.309 | 0.319 | 0.406 | 0.601 |

The data in Table 5 shows fibrous insulation products having R-values from 11 to 49 produced with average fiber diameters of less than or equal to 15 HT, original area weights in the range of 0.103 psf to 0.601 psf, and less than or equal to 6% by weight of the binder composition.

In some embodiments, the disclosed fiberglass insulation products produced with fibers having average fiber diameter in the range of 2.03 µm (8.0 HT) to 3.04 µm (12.0 HT), original densities in the range of 0.3 pcf to 2.0 pcf (4.8 kg/m³ to 32.0 kg/m³), and less than or equal to 10% by weight of the binder composition may be less stiff than conventional fiberglass insulation products with similar binder compositions but produced with fibers having an average fiber diameter greater than 15 HT (4 µm).

In some exemplary embodiments, the disclosed fiberglass insulation product 100 has a stiffness of 75 degrees or less, or 60 degrees or less, or 45 degrees or less, or 30 degrees or less. The stiffness of the fiberglass insulation product 100 is measured by suspending a specimen of the fiberglass insulation product over a center support and measuring the angle that the ends of the specimen deflect downward. The procedure is applicable to faced and unfaced insulation products and specimens sized to about 48 inches (122 cm) long and up to about 24 inches (61 cm) wide. In particular, the procedure utilizes a 24-inch (61 cm) long 2x6 beam (5.5 inches / 14.0 cm wide) arranged parallel to the floor. A 48-inch (122 cm) long specimen of the insulation product 100 is laid on top of the 2x6 beam parallel to the floor such that the middle of the specimen is centered on the 2x6 beam and the two ends of the specimen are free to hang down along either side of the beam. The angle of each end of the specimen is then measured as it hangs freely on the 2x6 beam, such as for example, by providing a 90-degree angle scale perpendicular to and below the 2x6 beam to visually determine the angle of each end. Stiffer insulation products have stiffness angles closer to 0 degrees as the two free ends of the insulation product 100 remain more parallel with the floor when freely supported by the 2x6 beam in the center. Less stiff products sag across the 2x6 beam and the ends becomes more perpendicular to the floor with stiffness angles closer to 90 degrees.

In an exemplary embodiment, the fibrous insulation product 100 is formed as a batt having a plurality of randomly-oriented glass fibers held together by a binder composition. The glass fibers have an average fiber diameter in the range of 2.03 µm (8.0 HT) to 3.04 µm (12.0 HT) and the fibrous insulation product has a less than 10% by weight of a formaldehyde-free binder. In one exemplary embodiment, the fibrous insulation product 100 has in the range of 3.0% to 4.0% by weight of a formaldehyde-free binder.

In some exemplary embodiments, the batt has a width in the range of 11.25 inches to 24.25 inches (28.58 cm to 61.60 cm), a length in the range of 47 inches to 106 inches (119 cm to 269 cm), and a thickness in the range of 3 inches to 4 inches (8 cm to 10 cm). In one exemplary embodiment, the batt is non-encapsulated (i.e., not surrounded by cover, such as a vapor barrier). The batt has a maximum R-value per inch of greater than or equal to 4.6 and a stiffness of less than or equal to 30 degrees.

In some exemplary embodiments, the fibrous insulation product 100 is designed to produce less prickle than known, comparable fibrous insulation products. As used in this application, "prickle" refers to the mechanical stimulation of nerve endings in the skin of a person. The particular nerve endings associated with prickle are triggered by a sufficient force applied perpendicular to the skin surface. The presence of a relatively small number of such stimuli per unit area of the skin surface is enough to trigger the sensation of prickle. For example, the ends of fibers that form a fibrous insulation product may protrude from the surface of the fibrous insulation product. These ends of the fibers, when contacting the skin of a person, such as an installer, act mechanically as Euler rods. If the fiber ends can sustain sufficient force before buckling, the ends can trigger the nerve endings and cause prickle. Thus, the diameter of the fibers, the stiffness of the fibers, and the number of fiber ends that protrude are among the variables that can impact prickle.

The propensity of a fibrous insulation product to cause prickle can be measured by a Wool Comfort Meter (WCM) in accordance with International Wool Textile Organization (IWTO) testing standard IWTO-66-2017. The WCM measures a test specimen and produces a single numeric comfort factor (CF) value. The comfort factor is measured at five different locations on the specimen and the average reading is recorded as the comfort factor value for the specimen. A lower comfort factor value indicates less propensity to produce prickle.

Table 6 illustrates comfort factor values for five prior art fibrous insulation specimens (A1-A5) and five exemplary embodiments of fibrous insulation products according the present disclosure (B1-B5). The specimens were tested in accordance with IWTO-66-2017 with a couple minor modifications. Minor specimen preparation modifications were taken in order to test the largest size insulation specimen as possible with the WCM. In particular, insulation specimens were cut to the L 15.75" (40.01 cm) x W 8.67" (22.02 cm), and then bisected to 1.5" (3.8 cm) thickness to fit under the WCM testing head. This is a slight modification to the length and width for IWTO-66-2017 that uses 300 mm x 300 mm specimens (11.8" x 11.8") and nominal thicknesses for fabrics. The only instrument modification needed was that the WCM's specimen stage needed to be removed to fit the relatively thicker 1.5" (3.8 cm) specimen under the testing head. No other modifications were made to the testing method or instrument.

Table 6 also includes the average fiber diameter/density values (Fd/D) for listed specimens. The fiber diameters are listed in HT and the density is listed in pcf. The average fiber diameter was measured via the SEM method described above. The density is measured after the binder composition has been cured and the cured product is in a free state (i.e., not compressed or stretched). Pcf can be converted to kg/m³using the formula: 1 kg/m³ = 1 pcf x 16.018.

**Table 6: R-Value, Avg. Fiber Diameter/Density Ratio, and Comfort Factor**

| Specimen | R-Value | Avg. Fiber Diameter/Density (HT/pcf) | Comfort Factor, CF |
|---|---|---|---|
| A1 | 19 | 50.0 | 267 |
| A2 | 30 | 32.0 | 243 |
| A3 | 30 | 28.8 | 170 |
| A4 | 13 | 30.2 | 192 |
| A5 | 17.6 | 14.6 | 150 |
| B1 | 19 | 35.8 | 131 |
| B2 | 28 | 32.3 | 74 |
| B3 | 12 | 28.8 | 75 |
| B4 | 24 | 14.5 | 57 |
| B5 | 20 | 35.1 | 140 |

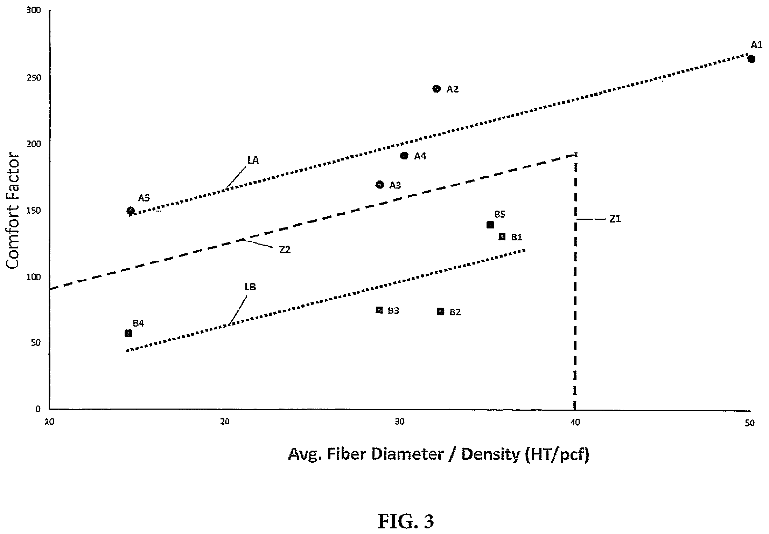

Referring to FIG. 3, the comfort factor is plotted vs. average Fd/D for the data in Table 5. As shown in FIG. 3, the least-squares regression line LA for specimens A1-A5 and least-squares regression line LB for specimens B1-B5 show, generally, that the comfort factor increases with increasing values of Fd/D. The least-squares regression line LB is defined by the equation CF = 3.417(Fd/D) - 4.8, having a coefficient of determination (R2) of 90% and p-values of 0.004 or less. FIG. 3 illustrates a first zone which is representative of the comfort factor values for exemplary embodiments of the fibrous insulation products according to the present disclosure. The first zone is bounded on the X-axis at a maximum Fd/D of 40 HT/pcf, as shown by dashed line Z1, and is bounded on the Y-axis by the dashed line Z2 defined by the equation CF = 3.417(Fd/D) + 60, which is a line parallel to the least-squares regression line LB. As shown in FIG. 3, the first zone encompasses all of the specimens B1-B5 and excludes all of the prior art fibrous insulation specimens (A1-A5).

Additional advantages and modifications will readily appear to those skilled in the art. While the fibrous insulation product has been illustrated herein as a flexible batt or blanket, other configurations and geometries can be used. Further, the fibrous insulation product may be used in a variety of ways and is not limited to any specific application. Therefore, the invention, in its broader aspects as defined in the claims, is not limited to the specific details, the representative apparatus, and illustrative examples shown and described. Accordingly, departures can be made from such details without departing from the scope of the invention as defined in the appended claims.

## Claims

1. A fibrous insulation batt, comprising:
a plurality of randomly oriented glass fibers; and
a cured binder composition that holds the glass fibers together;
wherein the quantity of binder is in the range of 3.5 wt.% to 6 wt.% by weight of the fibrous insulation batt, wherein the binder composition is formed as an aqueous binder composition comprising:
a polymeric polycarboxylic acid crosslinking agent and a monomeric polyol having at least four hydroxyl groups present in an amount to provide a molar ratio of carboxylic acid groups to hydroxyl groups between 0.60/1 to 1/0.6, wherein the monomeric polyol is a sugar alcohol having no reducing ability;
wherein the R-value of the fibrous insulation product is in the range of 10 to 54;
wherein the glass fibers have an average fiber diameter in the range of 8 HT (2.0 µm) to 12 HT (3.0 µm); and
wherein the fibrous insulation batt, after curing, has a density, when uncompressed, in the range of 0.30 pcf (4.8 kg/m³) to 2.7 pcf (43.2 kg/m³), and a stiffness of 45 degrees or less, wherein the stiffness is measured as described herein.

2. The fibrous insulation batt of claim 1, wherein the fibrous insulation batt has a thickness in the range 2 inches (5.1 cm) to 18 inches (45.7 cm) and is formed by no more than two plies of the randomly oriented glass fibers.

3. The fibrous insulation batt of claim 1, wherein:
the binder comprises polyacrylic acid, polyvinyl alcohol, sorbitol and sodium hypophosphite.

4. The fibrous insulation batt of claim 1, wherein the aqueous binder composition consists of a polymeric polycarboxylic acid crosslinking agent and a monomeric polyol having at least four hydroxyl groups present in an amount to provide a molar ratio of carboxylic acid groups to hydroxyl groups between 0.60/1 to 1/0.6, wherein the monomeric polyol is a sugar alcohol having no reducing ability.

5. The fibrous insulation batt of claim 1, wherein the fibrous insulation batt has an uncompressed thickness in the range of 2 inches (5.1 cm) to 3.5 inches (8.9 cm), wherein the R-value of the batt is greater than or equal to 11, and wherein the density of the batt is less than or equal to 0.44 pcf (7.0 kg/m³).

6. The fibrous insulation batt of claim 1, wherein the fibrous insulation batt has an uncompressed thickness in the range of 2 inches (5.1 cm) to 3.5 inches (8.9 cm), wherein the R-value of the batt is greater than or equal to 13, and wherein the density of the batt is less than or equal to 0.69 pcf (11.1 kg/m³).

7. The fibrous insulation batt of claim 1, wherein the fibrous insulation batt has an uncompressed thickness in the range of 2 inches (5.1 cm) to 3.5 inches (8.9 cm), wherein the R-value of the batt is greater than or equal to 15, and wherein the density of the batt is less than or equal to 1.41 pcf (22.6 kg/m³).

8. The fibrous insulation batt of claim 1, wherein the fibrous insulation batt has an uncompressed thickness in the range of 2 inches (5.1 cm) to 6.25 inches (15.9 cm), wherein the R-value of the batt is greater than or equal to 19, and wherein the density of the batt is less than or equal to 0.41 pcf (6.6 kg/m³).

9. The fibrous insulation batt of claim 1, wherein the fibrous insulation batt has an uncompressed thickness in the range of 2 inches (5.1 cm) to 5.5 inches (14.0 cm), wherein the R-value of the batt is greater than or equal to 20, and wherein the density of the batt is less than or equal to 0.65 pcf (10.4 kg/m³).

10. The fibrous insulation batt of claim 1, wherein the fibrous insulation batt has an uncompressed thickness in the range of 2 inches (5.1 cm) to 5.5 inches (14.0 cm), wherein the R-value of the batt is greater than or equal to 21, and wherein the density of the batt is less than or equal to 0.75 pcf (12.0 kg/m³).

11. The fibrous insulation batt of claim 1, wherein the fibrous insulation batt has an uncompressed thickness in the range of 2 inches (5.1 cm) to 9.5 inches (24.1 cm), wherein the R-value of the batt is greater than or equal to 30, and wherein the density of the batt is less than or equal to 0.45 pcf (7.2 kg/m³).

12. The fibrous insulation batt of claim 1, wherein the fibrous insulation batt has an uncompressed thickness of 12.0 inches (30.1 cm), wherein the R-value of the batt is greater than or equal to 38, and wherein the density of the batt is less than or equal to 0.45 pcf (7.2 kg/m³).

13. The fibrous insulation batt of claim 1, wherein the fibrous insulation batt has an uncompressed thickness in the range of 2 inches (5.1 cm) to 14.0 inches (35.6 cm), wherein the R-value of the batt is greater than or equal to 49, and wherein the density of the batt is less than or equal to 0.57 pcf (9.1 kg/m3).

14. The fibrous insulation batt of claim 1, wherein the fibrous insulation batt has an uncompressed thickness in the range of 2 inches (5.1 cm) to 3.5 inches (8.9 cm), wherein the R-value of the batt is greater than or equal to 11, and wherein an area weight of the batt is less than or equal to 0.13 psf (0.63 kg/m²).

15. The fibrous insulation batt of claim 1, wherein the fibrous insulation batt has a stiffness that is less than or equal to 30 degrees, wherein the stiffness is measured by suspending a 48-inch (122-cm) long specimen of the fibrous insulation batt over a center support and measuring the angle that the ends of the specimen deflect downward.

## Patentansprüche

1. Faserdämmmatte, umfassend:
eine Vielzahl von zufällig orientierten Glasfasern; und
eine ausgehärtete Bindemittelzusammensetzung, die die Glasfasern zusammenhält;
wobei die Menge des Bindemittels im Bereich von 3,5 Gew.-% bis 6 Gew.-% bezogen auf das Gewicht der Faserdämmmatte liegt und die Bindemittelzusammensetzung als wässrige Bindemittelzusammensetzung vorliegt, umfassend:
ein polymeres Polycarbonsäure-Vernetzungsmittel und ein monomeres Polyol mit mindestens vier Hydroxylgruppen in einer Menge, die ein Molverhältnis von Carbonsäuregruppen zu Hydroxylgruppen zwischen 0,60/1 und 1/0,6 ergibt, wobei es sich bei dem monomeren Polyol um einen Zuckeralkohol ohne reduzierende Wirkung handelt;
wobei der R-Wert des Faserdämmprodukts im Bereich von 10 bis 54 liegt;
wobei die Glasfasern einen mittleren Faserdurchmesser im Bereich von 8 HT (2,0 µm) bis 12 HT (3,0 µm) aufweisen; und
wobei die Faserdämmmatte nach dem Aushärten im unkomprimierten Zustand eine Dichte im Bereich von 0,30 pcf (4,8 kg/m³) bis 2,7 pcf (43,2 kg/m³) und eine Steifigkeit von 45 Grad oder weniger aufweist, wobei die Steifigkeit wie hierin beschrieben gemessen wird.

2. Faserdämmmatte nach Anspruch 1, wobei die Faserdämmmatte eine Dicke im Bereich von 2 Zoll (5,1 cm) bis 18 Zoll (45,7 cm) aufweist und aus höchstens zwei Lagen der zufällig orientierten Glasfasern besteht.

3. Faserdämmmatte nach Anspruch 1, wobei:
das Bindemittel Polyacrylsäure, Polyvinylalkohol, Sorbit und Natriumhypophosphit umfasst.

4. Faserdämmmatte nach Anspruch 1, wobei die wässrige Bindemittelzusammensetzung aus einem polymeren Polycarbonsäure-Vernetzungsmittel und einem monomeren Polyol mit mindestens vier Hydroxylgruppen in einer Menge besteht, die ein Molverhältnis von Carbonsäuregruppen zu Hydroxylgruppen zwischen 0,60/1 und 1/0,6 ergibt, wobei es sich bei dem monomeren Polyol um einen Zuckeralkohol ohne reduzierende Wirkung handelt.

5. Faserdämmmatte nach Anspruch 1, wobei die unkomprimierte Dicke der Faserdämmmatte im Bereich von 2 Zoll (5,1 cm) bis 3,5 Zoll (8,9 cm) liegt, wobei der Wärmedurchgangskoeffizient (R-Wert) der Fasermatte mindestens 11 beträgt und wobei die Dichte der Fasermatte höchstens 0,44 pcf (7,0 kg/m³) beträgt.

6. Faserdämmmatte nach Anspruch 1, wobei die unkomprimierte Dicke der Faserdämmmatte im Bereich von 2 Zoll (5,1 cm) bis 3,5 Zoll (8,9 cm) liegt, wobei der Wärmedurchgangskoeffizient (R-Wert) der Fasermatte mindestens 13 beträgt und wobei die Dichte der Fasermatte höchstens 0,69 pcf (11,1 kg/m³) beträgt.

7. Faserdämmmatte nach Anspruch 1, wobei die unkomprimierte Dicke der Faserdämmmatte im Bereich von 2 Zoll (5,1 cm) bis 3,5 Zoll (8,9 cm) liegt, wobei der Wärmedurchgangskoeffizient (R-Wert) der Fasermatte mindestens 15 beträgt und wobei die Dichte der Fasermatte höchstens 1,41 pcf (22,6 kg/m³) beträgt.

8. Faserdämmmatte nach Anspruch 1, wobei die unkomprimierte Dicke der Faserdämmmatte im Bereich von 2 Zoll (5,1 cm) bis 6,25 Zoll (15,9 cm) liegt, wobei der Wärmedurchgangskoeffizient (R-Wert) der Fasermatte mindestens 19 beträgt und wobei die Dichte der Fasermatte höchstens 0,41 pcf (6,6 kg/m³) beträgt.

9. Faserdämmmatte nach Anspruch 1, wobei die unkomprimierte Dicke der Faserdämmmatte im Bereich von 2 Zoll (5,1 cm) bis 5,5 Zoll (14,0 cm) liegt, wobei der Wärmedurchgangskoeffizient (R-Wert) der Fasermatte mindestens 20 beträgt und wobei die Dichte der Fasermatte höchstens 0,65 pcf (10,4 kg/m³) beträgt.

10. Faserdämmmatte nach Anspruch 1, wobei die unkomprimierte Dicke der Faserdämmmatte im Bereich von 2 Zoll (5,1 cm) bis 5,5 Zoll (14,0 cm) liegt, wobei der Wärmedurchgangskoeffizient (R-Wert) der Fasermatte mindestens 21 beträgt und wobei die Dichte der Fasermatte höchstens 0,75 pcf (12,0 kg/m³) beträgt.

11. Faserdämmmatte nach Anspruch 1, wobei die unkomprimierte Dicke der Faserdämmmatte im Bereich von 2 Zoll (5,1 cm) bis 9,5 Zoll (24,1 cm) liegt, wobei der Wärmedurchgangskoeffizient (R-Wert) der Fasermatte mindestens 30 beträgt und wobei die Dichte der Fasermatte höchstens 0,45 pcf (7,2 kg/m³) beträgt.

12. Faserdämmmatte nach Anspruch 1, wobei die Faserdämmmatte eine unkomprimierte Dicke von 12,0 Zoll (30,1 cm) aufweist, wobei der Wärmedurchgangskoeffizient (R-Wert) der Fasermatte mindestens 38 beträgt und wobei die Dichte der Fasermatte höchstens 0,45 pcf (7,2 kg/m³) beträgt.

13. Faserdämmmatte nach Anspruch 1, wobei die unkomprimierte Dicke der Faserdämmmatte im Bereich von 2 Zoll (5,1 cm) bis 14,0 Zoll (35,6 cm) liegt, wobei der Wärmedurchgangskoeffizient (R-Wert) der Fasermatte mindestens 49 beträgt und wobei die Dichte der Fasermatte höchstens 0,57 pcf (9,1 kg/m³) beträgt.

14. Faserdämmmatte nach Anspruch 1, wobei die Faserdämmmatte eine unkomprimierte Dicke im Bereich von 2 Zoll (5,1 cm) bis 3,5 Zoll (8,9 cm) aufweist, wobei der Wärmedurchgangskoeffizient (R-Wert) der Fasermatte mindestens 11 beträgt und ein Flächengewicht der Fasermatte höchstens 0,13 psf (0,63 kg/m²) beträgt.

15. Faserdämmmatte nach Anspruch 1, wobei die Faserdämmmatte eine Steifigkeit von höchstens 30 Grad aufweist, wobei die Steifigkeit durch Aufhängen einer 48 Zoll (122 cm) langen Probe der Faserdämmmatte über einer Mittelstütze und Messen des Winkels, um den sich die Enden der Probe nach unten durchbiegen, gemessen wird.

## Revendications

1. Matelas isolant fibreux, comprenant :
une pluralité de fibres de verre orientées de manière aléatoire ; et
une composition de liant durcie qui maintient les fibres de verre ensemble ;
dans lequel la quantité de liant est dans la plage de 3,5 % en poids à 6 % en poids par rapport au poids du matelas isolant fibreux, dans lequel la composition de liant est formée en tant que composition aqueuse de liant comprenant :
un agent de réticulation acide polycarboxylique polymère et un polyol monomère ayant au moins quatre groupes hydroxyle présents en une quantité permettant de fournir un rapport molaire des groupes acide carboxylique aux groupes hydroxyle compris de 0,60/1 à 1/0,6, dans lequel le polyol monomère est un alcool de sucre n'ayant aucune capacité réductrice ;
dans lequel la valeur R du produit isolant fibreux est dans la plage de 10 à 54 ;
dans lequel les fibres de verre ont un diamètre moyen de fibre dans la plage de 8 HT (2,0 µm) à 12 HT (3,0 µm) ; et
dans lequel le matelas isolant fibreux, après durcissement, a une masse volumique, lorsqu'il est non comprimé, dans la plage de 0,30 pcf (4,8 kg/m³) à 2,7 pcf (43,2 kg/m³), et une rigidité de 45 degrés ou moins, dans lequel la rigidité est mesurée comme décrit ici.

2. Matelas isolant fibreux selon la revendication 1, dans lequel le matelas isolant fibreux a une épaisseur dans la plage de 2 pouces (5,1 cm) à 18 pouces (45,7 cm) et est formé d'au plus deux couches de fibres de verre orientées de manière aléatoire.

3. Matelas isolant fibreux selon la revendication 1, dans lequel :
le liant comprend acide polyacrylique, alcool polyvinylique, sorbitol et hypophosphite de sodium.

4. Matelas isolant fibreux selon la revendication 1, dans lequel la composition aqueuse de liant est constituée d'un agent de réticulation acide polycarboxylique polymère et d'un polyol monomère ayant au moins quatre groupes hydroxyle présents en une quantité permettant de fournir un rapport molaire des groupes acide carboxylique aux groupes hydroxyle compris de 0,60/1 à 1/0,6, dans lequel le polyol monomère est un alcool de sucre n'ayant aucune capacité réductrice.

5. Matelas isolant fibreux selon la revendication 1, dans lequel le matelas isolant fibreux a une épaisseur non comprimée dans la plage de 2 pouces (5,1 cm) à 3,5 pouces (8,9 cm), dans lequel la valeur R du matelas est supérieure ou égale à 11, et dans lequel la masse volumique du matelas est inférieure ou égale à 0,44 pcf (7,0 kg/m³).

6. Matelas isolant fibreux selon la revendication 1, dans lequel le matelas isolant fibreux a une épaisseur non comprimée dans la plage de 2 pouces (5,1 cm) à 3,5 pouces (8,9 cm), dans lequel la valeur R du matelas est supérieure ou égale à 13, et dans lequel la masse volumique du matelas est inférieure ou égale à 0,69 pcf (11,1 kg/m³).

7. Matelas isolant fibreux selon la revendication 1, dans lequel le matelas isolant fibreux a une épaisseur non comprimée dans la plage de 2 pouces (5,1 cm) à 3,5 pouces (8,9 cm), dans lequel la valeur R du matelas est supérieure ou égale à 15, et dans lequel la masse volumique du matelas est inférieure ou égale à 1,41 pcf (22,6 kg/m³).

8. Matelas isolant fibreux selon la revendication 1, dans lequel le matelas isolant fibreux a une épaisseur non comprimée dans la plage de 2 pouces (5,1 cm) à 6,25 pouces (15,9 cm), dans lequel la valeur R du matelas est supérieure ou égale à 19, et dans lequel la masse volumique du matelas est inférieure ou égale à 0,41 pcf (6,6 kg/m³).

9. Matelas isolant fibreux selon la revendication 1, dans lequel le matelas isolant fibreux a une épaisseur non comprimée dans la plage de 2 pouces (5,1 cm) à 5,5 pouces (14,0 cm), dans lequel la valeur R du matelas est supérieure ou égale à 20, et dans lequel la masse volumique du matelas est inférieure ou égale à 0,65 pcf (10,4 kg/m³).

10. Matelas isolant fibreux selon la revendication 1, dans lequel le matelas isolant fibreux a une épaisseur non comprimée dans la plage de 2 pouces (5,1 cm) à 5,5 pouces (14,0 cm), dans lequel la valeur R du matelas est supérieure ou égale à 21, et dans lequel la masse volumique du matelas est inférieure ou égale à 0,75 pcf (12,0 kg/m³).

11. Matelas isolant fibreux selon la revendication 1, dans lequel le matelas isolant fibreux a une épaisseur non comprimée dans la plage de 2 pouces (5,1 cm) à 9,5 pouces (24,1 cm), dans lequel la valeur R du matelas est supérieure ou égale à 30, et dans lequel la masse volumique du matelas est inférieure ou égale à 0,45 pcf (7,2 kg/m³).

12. Matelas isolant fibreux selon la revendication 1, dans lequel le matelas isolant fibreux a une épaisseur non comprimée de 12,0 pouces (30,1 cm), dans lequel la valeur R du matelas est supérieure ou égale à 38, et dans lequel la masse volumique du matelas est inférieure ou égale à 0,45 pcf (7,2 kg/m³).

13. Matelas isolant fibreux selon la revendication 1, dans lequel le matelas isolant fibreux a une épaisseur non comprimée dans la plage de 2 pouces (5,1 cm) à 14,0 pouces (35,6 cm), dans lequel la valeur R du matelas est supérieure ou égale à 49, et dans lequel la masse volumique du matelas est inférieure ou égale à 0,57 pcf (9,1 kg/m³).

14. Matelas isolant fibreux selon la revendication 1, dans lequel le matelas isolant fibreux a une épaisseur non comprimée dans la plage de 2 pouces (5,1 cm) à 3,5 pouces (8,9 cm), dans lequel la valeur R du matelas est supérieure ou égale à 11, et dans lequel une masse surfacique du matelas est inférieure ou égale à 0,13 psf (0,63 kg/m²).

15. Matelas isolant fibreux selon la revendication 1, dans lequel le matelas isolant fibreux a une rigidité qui est inférieure ou égale à 30 degrés, dans lequel la rigidité est mesurée en suspendant un échantillon d'une longueur de 48 pouces (122 cm) du matelas isolant fibreux par-dessus un support central et en mesurant l'angle duquel les extrémités de l'échantillon s'infléchissent vers le bas.
